## Europäisches Patentamt
## European Patent Office
## Office européen des brevets

(11) Veröffentlichungsnummer: **0 081 181**
**B1**

(12)

# EUROPÄISCHE PATENTSCHRIFT

(45) Veröffentlichungstag der Patentschrift:
06.04.88

(51) Int. Cl.⁴: **B 60 B 3/16**

(21) Anmeldenummer: **82111039.2**

(22) Anmeldetag: **30.11.82**

(54) **Radschüssel eines Nutzfahrzeugrads.**

(30) Priorität: **03.12.81 DE 3147820**

(43) Veröffentlichungstag der Anmeldung:
**15.06.83 Patentblatt 83/24**

(45) Bekanntmachung des Hinweises auf die Patenterteilung:
**06.04.88 Patentblatt 88/14**

(84) Benannte Vertragsstaaten:
**AT BE CH FR GB IT LI NL SE**

(56) Entgegenhaltungen:
**BE-A-335 468**
**DE-C-278 833**
**FR-A-1 175 289**
**FR-A-2 508 850**
**US-A-3 357 747**

(73) Patentinhaber: **FRAUNHOFER- GESELLSCHAFT ZUR FÖRDERUNG DER ANGEWANDTEN FORSCHUNG E.V., Leonrodstrasse 54, D-8000 München 19 (DE)**

(72) Erfinder: **Grubisic, Vatroslav, Dr.- Ing., Zum Stetteritz 1, D-6107 Reinheim 4 (DE)**
Erfinder: **Fischer, Gerhard, Dipl.- Ing., Menzelweg 6, D-6100 Darmstadt (DE)**

(74) Vertreter: **Schiller, Walter, Dr., Kanzlei Münich, Steinmann, Schiller Willibaldstrasse 36- 38, D-8000 München 21 (DE)**

LIBER, STOCKHOLM 1988

## Beschreibung

Die Erfindung bezieht sich auf eine Radschüssel eines Nutzfahrzeugrades mit Bolzenlöchern im Radspiegelbereich, die zur Aufnahme der Radschüssel an einem Radnabenflansch oder an einer Bremstrommel mittels Radbolzen dienen, und deren Umgebung verstärkt ist.

Eine derartige Radschüssel eines Nutzfahrzeugrads ist aus der EP-A-0 039 934 bekannt. Die bei dieser bekannten Radschüssel vorgesehene Aufdickung im Bereich der Bolzenlöcher hat folgenden Zweck:

Bei Nutzfahrzeugenrädern, insbesondere bei LKW-Rädern, wird die Mindestwanddicke der Radschüssel im Verschraubungsbereich (Radspiegel) mit durch die dort auftretende Reibkorrosion bestimmt, die eine nennenswerte Verminderung der Schwingfestigkeit bewirkt. Durch Vermeidung der Reibkorrosion könnte eine deutliche Verringerung der Wanddicke und damit eine Material- und Gewichtseinsparung erzielt werden. Dies ist insbesondere bei Leichtmetallrädern von Bedeutung, die im Vergleich zu Stahlrädern im Radspiegelbereich eine fast doppelte Wandstärke erfordern. Dadurch bedingt wird bei vielen LKW-Typen, insbesondere bei solchen mit Zwillingsrädern, eine spezielle Verschraubung erforderlich und dadurch eine Veränderung des Spurmaßes bewirkt.

Durch die gemäß der EP-A-0 039 934 vorgesehene Aufdickung bzw. Verstärkung der Radschüssel im Bereich der Bolzenlöcher wird nun die Anlage der Radschüssel an dem Radnabenflansch oder an der Bremstrommel und damit die REibkorrosion auf den Umgebungsbereich der Bolzenlöcher beschränkt. Da die Wandstärke dieses Bereichs dicker als die Wandstärke des restlichen Bereichs der Radschüssel ist, kann so die Lebensdauer ohne allzu große Gewichtsnachteile erhöht werden.

Bei den Aus der EP-A-0 039 934 bekannten Radschüsseln ist jedoch nachteilig, daß durch die Materialverdickung der Umgebung der Bolzenlöcher die Erstarrungszeit beim Gießen erhöht wird, da gerade bei Leichtmetallrädern die erforderliche Materialverdickung beträchtlich ist. Darüber hinaus sind zusätzliche Arbeitsgänge, wie Plandrehen oder Schleifen erforderlich.

Der Erfindung liegt die Aufgabe zugrunde, eine Radschüssel eines Nutzfahrzeugrades gemäß dem Oberbegriff des Patentanspruchs 1 derart weiterzubilden, daß das Auftreten von Reibkorrosion im Verschraubungsbereich vermieden wird, ohne daß zusätzliche Maßnahmen, wie Plandrehen oder Schleifen erforderlich sind oder die Erstarrungszeit erhöht wird.

Eine erfindungsgemäße Lösung dieser Aufgabe ist mit ihren Weiterbildungen in den Patentansprüchen gekennzeichnet.

Erfindungsgemäß sind zur Verhinderung von Reibkorrosion im Verschraubungsbereich Zwischenscheiben vorgesehen, die mit der Radschüssel durch Aufkleben, Eingießen oder Einpressen fest verbunden sind. Diese Zwischenscheiben können als ein sämtliche Bolzenlöcher umfassender Ring oder als eine Vielzahl einzelner Scheiben ausgebildet sein, die die Bolzenlöcher unmittelbar konzentrisch umgeben.

Diese erfindungsgemäße Maßnahme hat nicht nur den Vorteil, daß zusätzliche Arbeitsgänge, wir Plandrehen oder Schleifen nicht mehr erforderlich sind, durch die erfindungsgemäße Ausbildung wird auch die Erstarrungszeit erkürzt, da das Rad durchgehend nur eine geringe Wanddicke haben muß.

Darüber hinaus kann insbesondere dann, wenn die Zwischenscheiben bei einer aus Leichtmetall bestehenden Radschüssel aus Stahl bestehen, eine gegenüber einer Radschüssel, bei dem die Aufdickung einstückig erfolgt, wesentlich größere Erhöhung der Festigkeit erzielt werden, auch wenn die Wanddicke der Zwischenscheiben vergleichsweise klein ist.

Von besonderem Vorteil ist auch die im Anspruch 2 gekennzeichnete Weiterbildung, bei der auch im Auflagebereich der Radbolzenköpfe oder -muttern solche Zwischenscheiben vorgesehen sind, wodurch auch hier eine Reibkorrosion vermieden wird.

Aus der DE-AS 20 63 379 ist es bekannt, in Durchbohrungen des ebenen Radbefestigungsbereichs bzw. des Radspiegels Hülsen einzupassen, durch welche die der Befestigung dienenden Bolzen hindurchtreten können. Diese Hülsen schließen stirnseitig bündig mit dem Radspiegel ab, so daß sie selbst dann, wenn sie aus einem anderen Material als die Radschüssel bestehen sollten, zu einer Reduzierung der Reibkorrosion nicht beitragen können, da der Radspiegel in seiner ganzen Ausdehnung der Anlagefläche mit dem Radnabenflansch bzw. der Bremstrommel oder dem Zwillingsrad bildet. Überdies machen die radspiegelseitigen Stirnflächen der Hülsen nur einen geringen Bruchteil des Gesamtfläche des Radspiegels aus. Bei der bekannten Radschüssel werden die Radkräfte durch Flächenpressung zwischen den Hülsen und der Radscheibe radial zu den Hülsen übertragen, während bei der erfindungsgemäßen Radschüssel die Radkräfte als (Haft-) Reibungskräfte unter direkter Einbeziehung der Radscheibe in den Kraftfluß der Radbolzen übertragen werden.

Nachfolgend wird die Erfindung an Hand von Ausführungsbeispielen unter Bezug auf die Zeichnung näher beschrieben.

Es zeigt:

Figur 1 eine Teilansicht auf eine Radschüssel mit daran befestigten Einzel-Zwischenscheiben,

Figur 2 eine Teilansicht einer Radschüssel mit einer auf dieser befestigten, alle Bolzenlöcher umfassenden ringförmigen (Umfassungs-) Zwischenscheibe, und

Figur 3 einen Schnitt III-III nach Figur 1 bzw. Figur 2.

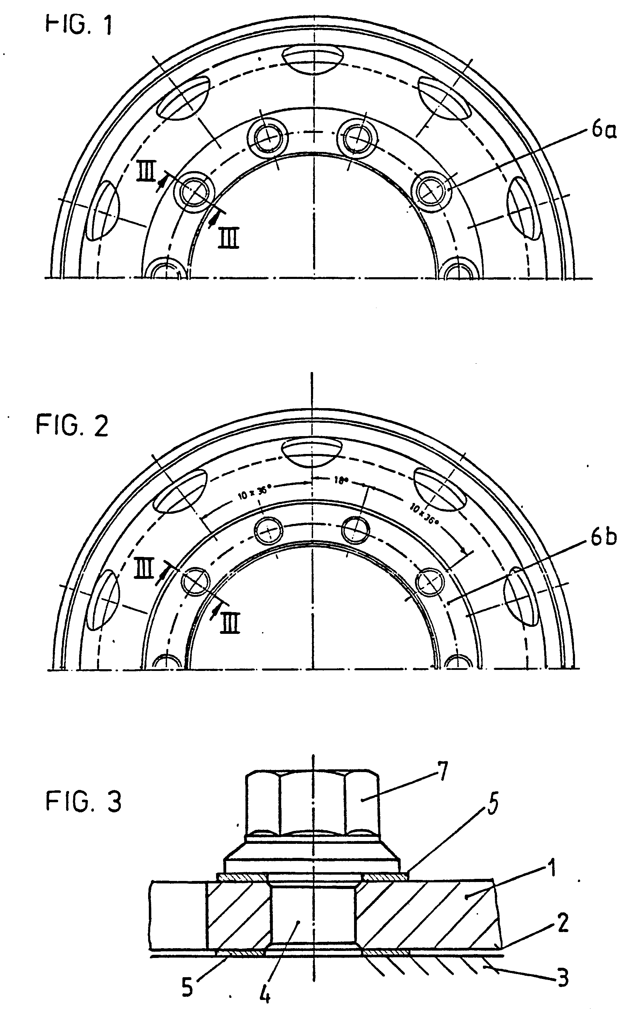

In der Zeichnung, insbesondere Figur 3, ist eine Radschüssel 1 mit einem Radspiegel 2 und Bolzenlöchern 4 dargestellt. Mit 3 ist der entsprechende Teil eines Radnabenflansches bzw. einer Bremstrommel angedeutet, an dem die Radschüssel 1 mittel eines nicht dargestellten, durch eine Radmutter 7 angedeuteten Radbolzens befestigt ist.

Im Auflagebereich des Radspiegels 2 ist eine mit der Radschüssel 1 durch Aufkleben, Einpressen, Eingießen fest verbundene Zwischenscheibe 5 vorgesehen, durch welche die Bolzenlöcher 4 umgeben sind. In der Figur 1 dargestellten ersten Ausführung ist als Zwischenscheibe 5 eine Vielzahl von einzelnen, unmittelbar konzentrisch um die jeweiligen Bolzenlöcher angeordneten Einzelscheiben vorgesehen.

In der Figur 2 dargestellten Ausführungsform ist die Zwischenscheibe 5 als eine alle Bolzenlöcher umfassende ringförmige Scheibe 6b ausgebildet. Die Gesamtheit der die Bolzenlöcher umgebenden Zwischenscheiben 5 bildet die alleinige Anlagefläche zwischen dem Radspiegel 2 und dem Radnabenflansch bzw. der Bremstrommel 3 oder dem Zwillingsrad.

Durch die Anordnung gleichartiger Zwischenscheiben 5 auch zwischen der Radschüssel 1 und dem Auflagebereich der Radmuttern 7 bzw. der entsprechenden Radbolzenköpfe wird das Auftreten von Reibkorrosion auch in diesem Bereich unterbunden.

## Patentansprüche

1. Radschüssel eines Nutzfahrzeugrads mit Bolzenlöchern im Radspiegelbereich, die zur Aufnahme der Radschüssel an einem Radnabenflansch oder einer Bremstrommel mittels Radbolzen dienen, und deren Umgebung verstärkt ist, dadurch gekennzeichnet, daß die Verstärkung durch Zwischenscheiben (5) erfolgt, die mit der Radschüssel durch Aufkleben, Eingießen oder Einpressen fest verbunden sind, eine im Verhältnis zur Radschüssel geringe Wanddicke aufweisen und die Bolzenlöcher (4) unmittelbar konzentrisch oder als in Umfangsrichtung alle Bolzenlöcher umfassender Ring umgeben.

2. Radschüssel nach Ansprcuh 1, dadurch gekennzeichnet, daß zusätzlich auch im Auflagebereich der Radbolzenköpfe oder -muttern (7) gleichartige Zwischenscheiben (5) vorgesehen sind.

## Revendications

1. Disque de roue d'un véhicule utilitaire, comprenant des trous de pivot dans la zone du rebord de roue qui sont pourvus pour le logement du disque de roue à une collerette du moyeu de roue ou à un tambour de frein au moyens des pivots de roue, et dont les environs sont renforcés, caractérisé en ce que des cales (5) sont pourvues pour ledit renforcement, qui sont fixées au disque de roue par collage, coulée ou en pressant, et qui présentent un épaisseur de paroi faible relativement au disque de roue, tout en enveloppant les trous de pivot (4) en relation directement concentrique ou sous forme d'une bague enveloppant tous les trous de pivot en direction périphérique.

2. Disque de roue selon la revendication 1, caractérisé en ce que de plus des cales similares (5) sont pourvues aussi dans la zone de contact des têtes de pivot de roue ou des écrous (7).

## Claims

1. Disc wheel body of a utility vehicle, comprising stud holes in the area of the wheel rim for accomodation of the wheel disc at a hub flange or a brake drum by means of wheel studs, the area surrounding the stud holes being reinforced, characterized in that said reinforcement is achieved by shims (5) fixedly attached to the wheel disc by cementing, integral casting or pressing, having a small wall thickness compared against the wheel disc, and surrounding the stud holes (4) either in an immediately concentric relationship or in the form of a ring envelopping all stud holes in the peripheral direction.

2. Disc wheel body according to Claim 1, characterized in that additionally similar shims (5) are provided in the contact area of the wheel stud heads or nuts (7) as well.

FIG. 1

6a

III

III

FIG. 2

10 x 36°    18°    10 x 36°

6b

III

III

FIG. 3

7

5

1

5

2

4

3

1